# EUROPEAN PATENT APPLICATION

(11) **EP 0 627 837 A1**
(43) Date of publication of application: **07.12.1994**
(21) Application number: 94303764.8
(22) Date of filing: 25.05.1994
(51) Int. Cl.: H04M 3/38, H04M 3/42

(54) **Telecommunications call completion based on mutually agreed upon criteria**

(30) Priority: 02.06.1993 US 71133
(71) Applicant: AT&T Corp., New York, NY 10013-2412 (US)
(72) Inventor: Kochanski, Gregory Peter, Dunellen, New Jersey 08812 (US)
(74) Representative: Buckley, Christopher Simon Thirsk

(57) **Abstract**

A new telephone service is described that places calls between people who mutually want to communicate with each other. The telephone or other network matches lists of users desiring to receive calls from other users with similar lists. Affinity lists can be based on family, friends, tennis partners, members of discussion groups or co-workers. Speech recognition and keying techniques are used to prepare lists for storage in a database. Database comparisons are used to direct the completion of calls between users in affinity groups who have indicated their availability.

## Description

### Field of the Invention

The present invention relates to telecommunications systems, and more particularly to telephone systems for automatically establishing communication between subscribers based on mutually agreed upon connection criteria.

### Background of the Invention

One limitation imposed by most uses of the current telephone system is that a potential user is required to explicitly originate each phone call. With this restriction relaxed by mutual agreement between two or more parties, the telephone system can provide a convenient complement for the way people think and act in other circumstances. When so modified, the telephone system can introduce some of the flavor of casual face-to-face encounters, those in which no explicit introduction is required prior to talking.

While prior art systems and techniques have included event-responsive calling, these systems and techniques have typically been responsive to alarm conditions or the like or have involved recorded announcements, rather than mutual availability for and interest in participation in a call.

### Summary of the Invention

In a basic embodiment of the present invention, telephones are fitted with a button or key, conveniently styled a "call me" key. Of course equivalent means to a call me key can be substituted in appropriate cases. Thus, for example. users conveniently dial a predetermined number and, if more than one variety of service is available, enter a code corresponding to the desired service. The system is thus able to recognize the calling station number and, as appropriate, the interest and availability at that station. Regardless of the particular means for signaling availability or interest to the system it sometimes proves convenient in the following discussion to refer to such signaling as depressing the call me key.

When the user depresses the call me key, the telephone network, as modified in a manner hereinafter described, searches for people who are mutually interested in talking to each other as indicated by having their "call me" buttons pressed. If there is more than one such person, the network selects randomly, or in accordance with some rule or algorithm. For example, the network can select persons who have not spoken with each other for some predetermined time, or for the longest time. The network then calls both people, advantageously making a brief introductory announcement, and completes the connections.

One straightforward example of the use of such a service is based on a list of friends and family members. Each subscriber to the service advantageously provides a list of people that he or she is interested in speaking to. Then, upon depression of the call me button by a first party at an opportune time, that first party is connected to an available person identified in the first party's list. The person at the other end of the call, having similarly pressed the call me button, would be virtually assured to be someone who wants to talk to the first party. In appropriate cases, each party can designate parties from whom he or she will accept calls.

Such a telephone service reduces the need for a reason or pretext thus substantially improving the quality of life for many people. For example, the elderly and handicapped who can't travel easily would have much more contact with the outside world.

In accordance with another aspect of the present invention, a substantial advantage is achieved in that a user need not be concerned about awakening a called party or disturbing the called party at dinner or during other activities. Calls are connected only when both parties have activated the call me feature.

This service eliminates "telephone tag" by placing a return call as soon as both parties indicate availability. This is a substantial improvement over conventional automatic callback services, because it would only make the return call when someone was there to receive it.

In practice, the service includes the use of a selected one of a plurality of stored lists, thereby permitting a simple selection of a subset from, e.g., a list of members of a business, association, club or other group. For example, a user can activate the service, specify the tennis list (intermediate players), and be connected to someone of the appropriate skill level with whom to play tennis. The call allows users to verbally arrange details, and to edit the list to eliminate incompatible tennis partners. Similarly, arrangements for exchange babysitting among groups of parents could becomes practical using a service based on the present invention.

In an alternative embodiment, the present invention provides menus, e.g., video menus, for providing classified telephone directory like services. An important advantage of using the present invention in this manner is that only those establishments that are open for business are indicated on the menu. In this application, the system displays a selection of business, rather than making a particular selection.

Other applications include a "universal yard sale". Given a set of people looking for bicycles (with their "call-me" buttons pushed) and a set of people selling bicycles (similarly requesting calls), the network easily makes the desired connections. Specifically interested buyers are thus connected to permit the efficient negotiation of a sale. Transaction costs are lowered, permitting markets in a variety of second-hand property to be much more active. In this respect, the present invention provides a great improvement over an advertisement in a newspaper, because phone numbers are not published, and each party controls availability to receive calls. That is, users can switch off the service at night, or as soon as the item was sold.

The present invention can also be arranged to provide a round-table discussion on a topic chosen by the participants. These groups can form and disband dynamically, without requiring a leader to organize them or even to select topics. In one application, the network forms a group as soon as several people ask for the same or a related subject. Unlike services which have to pay traditional advertising costs, services based on call me activation incur minimal cost for creating a group. Thus, topics of interest to only a few people are economically viable.

The features of the present invention may be implemented through modifications and augmentations of traditional central office equipment or intelligent network hardware/software platforms cooperating with signaling and processing facilities of varying complexity at a local user station. The station facilities can be as simple as a switch modification for providing tone or other signal indications to a central office. In more elaborate user stations, a processor controlled system will include more sophisticated input and output facilities, thereby simplifying the functional requirements of the central office or other list processing database system A variety of implementation options exist at a central office for recognizing and processing input from the user stations. Alternatively, intelligent network systems including means for referring service requests to a database can be used. These and other implementations will be described in more detail below in connection with the included drawing.

### Brief Description of the Drawings

Fig. 1 shows an illustrative overall system diagram including a typical modified telephone set providing signal information to a telephone central office or other list database processor.

Fig. 2 shows the manner in which one or more tones can be applied to the telephone line to signal a central office or other facility controlling the connection of users in accordance with one embodiment of the present invention.

Fig. 3 shows a processor-based user terminal including traditional telephone functionality and other features.

Fig. 4 shows a central office implementation for database and switching functionability in accordance with aspects of the present invention.

Figs. 5 and 6 show lists associated with users having various affinity group relationships.

Fig. 7 shows an intelligent network implementation of database and switching functionability in accordance with an embodiment of the present invention.

### Detailed Description

Reference is made to U.S. patent application entitled "Alerting and Monitoring Services For Communications Systems" and "Automated Detection Of Composite Events," by J. H. Hazy et al and N. H. Gehani et al, respectively, which applications are filed concurrently with the present application. Each of these applications is assigned to the assignee of the present invention and each application is hereby incorporated by reference herein.

### Local Processor

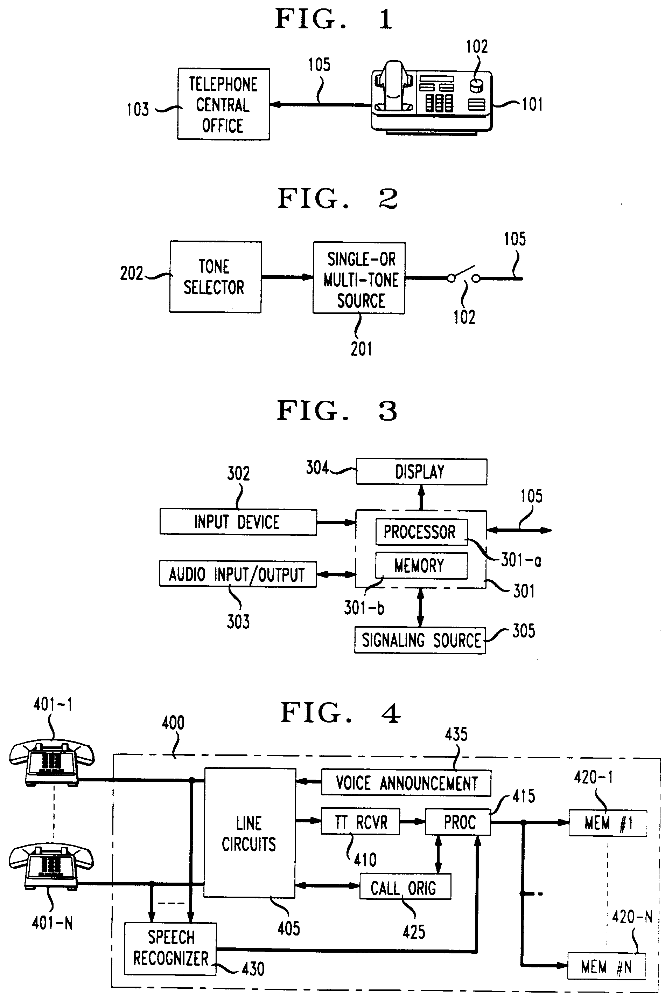

Fig. 1 shows a telephone set 101 fitted with a button or key, 102, conveniently styled a "call me" key. Such a key, when depressed, advantageously applies a tone (or combination of tones) to the telephone line 103 connecting to a telephone central office 103 or other network connection to a database list processor Such tones are, depending on the arrangements at the telephone set 101 and network connection, applied continuously or only when the handset is lifted off hook.

Fig. 2 shows a circuit arrangement for providing the tones described in connection with Fig. 1. Illustrative tone source 201 provides one or more tones through call me key 102 to telephone line 105. Optional tone selector 202 provides for signaling different tones or combinations of tones, e.g., by a switch selection In one embodiment, call me key 102 is arranged to include a rotary selection switch to select between different desired positions, as well as to permit depression to connect tone source 201 to be connected to the telephone line 105.

While Fig. 1 shows only a single call me button, it should be understood that a plurality of such buttons, and connections to corresponding tone sources, may be used in appropriate cases. While tones are indicated as a means for transmitting signaling information to the central office or other processing center, it should be understood that signal sequences, e.g., coded digital patterns may be more appropriate with some kinds of equipment.

Of course alternative signaling means can be substituted for an explicit call me key in particular applications. Thus, for example, users can conveniently dial a predetermined telephone number and, if more than one variety of service is available, enter a code corresponding to the desired service. The system is thus able to recognize the calling station number and, as appropriate, the interest and availability at that station. Regardless of the particular means for signaling availability or interest to the system, it sometimes proves convenient in the following discussion to refer to such signaling as depressing the call me key.

More generally, the arrangement of Fig. 3 provides a full range of control and communication functionality for a user terminal in connection with embodiments of the present invention. The system of Fig. 3 may be incorporated in a user terminal, or it may be provided as an adjunct to a communication terminal, such as a telephone station. Shown in Fig. 3 is a processor 301 connected (through standard coupling facilities, not shown) to telephone line 105. Processor 301, typically operating under a program stored in included memory, responds to signals from input device 302 and signals on telephone line 105 to, among other functions, connect audio input/output device 303 and display device 304 to telephone line 105. Audio input/output system 303 includes standard telephone handsets and other microphone and speaker arrangements. Input device 302 may include standard telephone keypad devices, but may also include a standard computer keyboard or other input device, such as a mouse or pointing device associated with display 304. Display 304 may be any type of display device capable of displaying character or graphic information, e.g., when compiling or reviewing lists of persons or telephone numbers. Signaling source 305 operating under the control of processor 301 provides tones or other signaling information specified by processor 301.

In some embodiments, audio input/output system 303 will include speech recognition equipment of known design capable of translating spoken information to a form suitable for use by processor 301 and for communication to the central office or other list processing systems. Output functionality in audio input/output system 303 will likewise include text-to-speech translation for converting information originating in, or received by, processor 301.

It will be recognized that a variety of levels of complexity can be used at the user station, depending on such factors as the sophistication of the central office or other list database processing facilities, and such other factors as place of location of the user station. Thus, for example, portable user terminals will have some limitations on power, size and cost that stationary home- or office-based terminals may not be subject to.

In some applications, a timer, illustratively programmed in processor 301 in the system of Fig. 3, or a photocell is arranged to automatically cancel some or all call-me requests after a selected period of time or at night when users do not want to be disturbed.

Using one or more of the signaling and input systems shown in Figs. 1-3 and described above, a user enters information to be communicated over telephone line 105 to the central office or list database processing facility. It will prove convenient, especially in connection with systems generally of the type shown in Fig. 3 and described above, to enter lists of people, and respective telephone numbers, or other information such as a class of goods (e.g., bicycles), topics for discussion groups, etc. for communication to the central office 103 or other list processing facility. This may be conveniently accomplished by dialing a local (or toll-free) phone number, to transmit information assembled by the user at his or her terminal. Alternatively, the call may be placed and, after connection to the list processing facility, the list information entered while the user is connected on line. When system constraints dictate use of only a telephone keypad, well-known digit input techniques such as that described in "Alphabetic Data Entry Via the Touch-Tone Pad: A Comment," by Sidney L. Smith and Nancy C. Goodwin, Human Factors, 1971, 13(2), pp. 189-90, may advantageously be used.

Arrangements can be made to turn the call-me function on at the time the list data are entered, or the service can be activated at a later time. When call-me service is turned off, whether by user-initiated signaling or by timer or other automatic means, a separate call is advantageously placed to the central office 103 or other database processing facility. Of course, the database facility can be programmed to disable all or some call-me requests at a specific time or upon the happening of some event.

### Central Processor

Fig. 4 shows the arrangement of Fig. 1 in greater detail. In particular, Fig. 4 shows a plurality of user stations 401-i,i= 1,2,...,N, connected to illustrative central office or other switching system 400. Central office system 400 may be of standard design except as indicated in the sequel. An illustrative central office is the well-known AT&T 5ESS system.

Central office system 400 includes standard line circuits 405 or equivalent interface units well known in the art. Processor 415 provides the overall control and coordination function of modern telecommunications switching systems, including control based on decoded input signals from user stations 401-i. Such input signals from user terminals are typically touch-tone signals processed by touch-tone receiver 410 and supplied to processor 415. Also included in switching system 400 are facilities for identifying the calling party and means for identifying the status of respective call-me buttons.

Central Office 400 advantageously is arranged to include a speech recognizer, such as that described in U.S. Patent 4,827,500 issued May 2, 1989 to Binkerd, et al, and assigned to the assignee of the present invention. Apparatus of the type described in Patent 4,827,500 functions to provide input to the processor 415 to control call processing and other system functions. In the illustrative embodiment of the invention shown in Fig. 4, such speech recognition equipment is represented as block 130, where it is shown connected to user stations 401-i for receiving user speech signals. Upon recognition by speech recognizer 430, information is passed to processor 415 for further disposition.

Processor 415 is also arranged to provide control of call origination system 425. Thus, upon identification of two or more parties at respective user stations 401-i to be connected in a telephone call, processor 415 controls call origination system 425 to place calls to the identified stations. Such machine originated calling is well known in the art and is described, e.g., in U.S. Patents 3,461,241 and 4,766,604. In the present context, however, processor 415 provides for a connection of the identified stations 401-i to each other rather than to a particular system element, such as a recorded message.

The system of Fig. 4 further advantageously includes a voice announcement system 435 to provide brief announcements to the user stations 401-i called by call origination element 425. Thus called stations are optionally given an opportunity to choose not to be connected to the call.

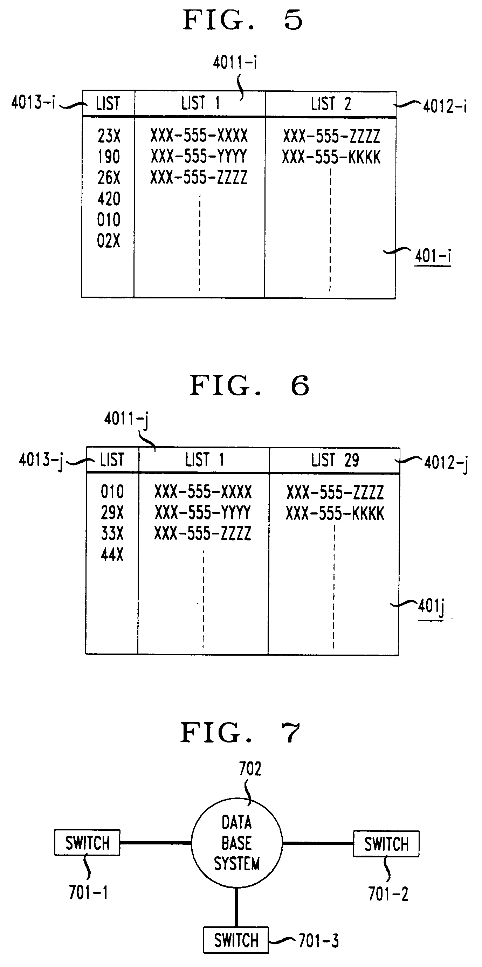

Memories 420-i, i=1,2,...,N cooperate with program-controlled processor 415 to effect the selection of stations to be called. Thus each memory 420-i stores one or more lists corresponding to respective station 401-i. The lists take any desired form, including the forms described above. Thus if a list like that shown Fig. 5.

Fig. 5 shows a typical list format associated with the user 401-i. As shown in Fig. 5, it proves convenient to divide user 401-i's lists into individual lists of persons in an affinity group and currently existing affinity groups. For example. List 1 indicated by memory partition 4011-i, might include the members of the discussion group to which user 401-i belongs. Each entry in List 1, is then a telephone number to be called when the appropriate combination of events occurs. Thus, for example, if user 401-i indicates availability for participation in the discussion group associated with List 1 by pressing his or her call-me button (or other signaling technique), then processor 415 conveniently sets an indication to that effect. This indication is illustratively represented in memory partition 4013-i in Fig. 5 by inserting an "O" (for open) next to the list item 01. It should be noted that the same O indication is set for Lists 19 and 42, in memory partition 4013-i, but not for Lists 23, 26 nor 02. Thus user 401-i has indicated availability or interest in participating in calling activities associated with lists 01, 19, and 42, but not for the activities associated with Lists 23, 26 and 02.

Fig. 6 shows the lists associated with user 401-j. In the indicated example, user 401-j belongs to groups 01, 29, 33 and 44. However, user 401-j has indicated interest in participating currently only in group 01. Thus, the only group designation in the list in memory partition 4013-j that has a "O" next to it is the group 01. As in the memory partition 401-i shown in Fig. 5, the individual phone numbers of the members associated with List 1 are present, but user 401-j also belongs to group 29 (among others). So, the memory partition 4012-j includes the phone numbers for the group associated with List 29.

For the present illustrative example, it is enough that both user 401-i and user 401-j both belong to group 01 and have indicated availability to participate in the discussion. Thus, processor 415 continually compares the memory partitions 4013-i and 4013-j, and corresponding partitions for other system users to identity common open states for members of a group. Having determined that both user 401-i and user 401-j are available, processor 415 controls call origination element 425 to call each of the users 401-i and 401-j. Each such user will, upon answer of a call originated by the system of Fig. 4, illustratively be greeted by a statement from voice announcement element 435 to the effect that a discussion by group 01 is underway (or has been in progress) and the user will be invited to join or terminate the call.

It should be understood that the list format is preferably arranged for convenience and efficiency, and may be adapted to particular system and user needs. The exemplary list content is likewise arbitrary, but should be tailored to meet user needs in defining the affinity group, e.g., family members, potential tennis partners, sports discussion group, garage sale operators and customers or any other desired grouping.

Fig. 7 shows an alternative embodiment of the present invention based on now-common intelligent network structures and methods. Thus, individual switches 701-1, 701-2 and 701-3 are shown connected to a common database system 702. In keeping with standard practice, database system 702 typically comprises a general purpose computer with control programs for accessing mass memory. As in the case of the systems of Figs. 4-6, individual user stations are connected, either directly or through intermediate switching and transmission facilities to the switches 701-i, i=1,2,3 to the database system 702. Similarly, the switches 701 are connected to database system 702, typically through a signaling protocol such as Signaling System 7 adopted by the international standards body CCITT. Again, the switches 701 may be connected through intermediate data communication nodes, sometimes referred to as signal transfer points. Likewise, other particular applications of the present invention will employ the teachings of the present disclosure and in particular the arrangement of Fig. 7 using other particular signaling protocols.

Of course there is no special significance to the number of switches in the illustrative example of Fig. 7. In general, any number of switches 701 can be served by a database system 702, subject only to the processing capacity of the computer at database system 702 and the storage capacity for the database system.

In operation, then users connected to the switches indicated in Fig. 7 will indicate availability for participation in a group activity by sending a call-me signal through one of the switches 701 which then relays such information to database system 702. Database system 702 examines the list data stored therein for matches of prescribed kinds, e.g., the presence of an "O" in an appropriate field, e.g.. in the manner described above in connection with Figs. 5 and 6. Upon detection of mutual availability, a message of standard form is sent back to the switch associated with the available users (they need not be associated with the same switch), thereby to cause the respective switching systems to place a call to the available users.

It will be appreciated by those skilled in the art that the present invention will find application in other than traditional telecommunications systems. Thus, for example, the access to users may be by way of wireless or other radio channels or by way of video cable systems. Likewise, the calls are in no way limited simply to traditional voice calls. Video calls, video conferencing and data communication calls can be completed using the principles of the present invention. When system circumstances dictate, appropriate parts of the functionality described,e.g., for building and editing lists, can be located at either the user locations or the central office or other switching or database system location. Thus it may prove convenient to have speech recognition capabilities for data input implemented at the user station in combination with, or to the exclusion of such recognition capabilities at a central office or other central location.

While detailed circuitry and programs have not been provided in the present description of the present invention, those skilled in the arts will recognize that a variety of particular apparatus and program implementations may be accomplished based on the present teachings. The incorporated Gehani, et al application provides a useful description of database preparation and use, and the incorporated Hazy, et al application describes other applications of active database technology.

## Claims

1. A method for establishing communications among a plurality of users comprising
means for recognizing a ready signal indicative of the availability of at least some of said users,
means for establishing a communication path between at least some of said users in response to said ready signal.

2. The system of claim 1 wherein said means for recognizing comprises means for receiving an indication of the readiness of each of said users.

3. The system of claim 2 wherein said means for recognizing comprises
means for storing a prearranged time schedule for availability for said users, and
means for indicating current time, and
means responsive to a match between the times of availability of at least some of said users and said current time.

4. The system of claim 2 wherein said means for recognizing comprises
means for recognizing a spoken indication of readiness by one or more of said users.

5. The system of claim 4, wherein said means for recognizing a spoken indication of readiness comprises means for providing a request to speak a particular utterance.

6. The system of claim I wherein said ready signal relative to a particular user indicates readiness to take part in a communication of a particular kind.
